# EUROPÄISCHE PATENTSCHRIFT

(11) **EP 0 937 643 B1**
(45) Veröffentlichungstag und Bekanntmachung des Hinweises auf die Patenterteilung: **28.04.2004**
(21) Anmeldenummer: 99103205.3
(22) Anmeldetag: 18.02.1999
(51) Int. Cl.: B64D 9/00, B65G 13/06

(54) **Frachtladesystem**
Cargo loading system
Système de chargement de marchandises

(30) Priorität: 20.02.1998 DE 19807231
(43) Veröffentlichungstag der Anmeldung: 25.08.1999
(60) Teilanmeldung: 04003048.8
(73) Patentinhaber: Telair International GmbH, 83714 Miesbach (DE)
(72) Erfinder: Huber, Thomas, 82393 Iffeldorf (DE)
(74) Vertreter: Meissner, Bolte & Partner

(56) Entgegenhaltungen:
- DE-A- 4 200 985
- DE-A- 19 539 627

## Beschreibung

Die Erfindung betrifft ein Frachtladesystem, wie es in Flugzeugen zum Fördern von insbesondere Containern, Paletten oder dergleichen im Frachtraum Verwendung findet.

Beim Be- und Entladen von Flugzeugen kommt es darauf an, daß die einzulagernden bzw. auszuladenden Gegenstände möglichst schnell aber sicher an ihre Plätze gebracht bzw. wieder aus dem Frachtraum heraustransportiert werden. Ein solcher Beund Entladevorgang muß aber nicht nur in kurzer Zeit geschehen, er muß auch unter sehr unterschiedlichen Umständen erfolgen. Derartige Unterschiede liegen zum einen in der Ausgestaltung der Gegenstände selbst, die verschiedene Bodenstrukturen oder auch Befüllungsgewichte haben, sie liegen auch in der Position des Flugzeugs bzw. des Frachtdecks, das in verschiedenen Neigungswinkeln verlaufen kann, da die Standpositionen von Flugzeugen nicht immer optimal sind und auch durch die Beladungsgewichte schwanken. Weiterhin ist zu berücksichtigen, daß die Böden der zu transportierenden Gegenstände unterschiedliche Stabilität und auch Beschaffenheit hinsichtlich ihrer Rutschfestigkeit haben können. Feuchtigkeit oder Verschmutzung spielen hier eine große Rolle.

Schließlich spielt das zu Verfügung stehende Bedienungspersonal bei der hier zugrundeliegenden Problematik eine große Rolle. Um Kosten zu sparen möchte man mit möglichst wenig Personal auskommen, das darüber hinaus oftmals ungeübt ist und auch insbesondere aufgrund des Zeitdrucks unsorgfältig arbeitet.

Bei den herkömmlichen Systemen ist es zum größten Teil dem Bedienungspersonal überlassen, wie die Rollenantriebseinheiten gesteuert werden, wobei üblicherweise mit konstanten Förderparametern (insbesondere hinsichtlich Fördergeschwindigkeit, Anpreßdruck der Antriebsrollen usw.) ohne Berücksichtigung der oben genannten Unterschiedlichkeiten gearbeitet wird.

Dokument DE 19 539 627 offenbart eine Antriebsrolleneinheit für ein Frachtladesystem, die eine Sensoreinrichtung aufweist, um einen Schlupf zwischen der Antriebsrolle und dem zu beföndernden Gegenstand zu messen und den Antriebsmotor eben diesen Antriebsrolleneinheit so zu regeln, daß den Schlupf vermindert, bzw. unterbunden wird.

Der Erfindung liegt die Aufgabe zugrunde, ein Frachtladesystem aufzuzeigen, das bei vermindertem Bedienungsaufwand den Be- und Entladevorgang verbessert.

Diese Aufgabe wird durch ein Frachtladesystem nach dem Patentanspruch 1 gelöst.

Ein wesentlicher Punkt der Erfindung liegt darin, daß die hier wesentlichen, von Gegenstand zu Gegenstand variierenden Parameter direkt oder indirekt durch Sensoreinrichtungen erfaßt und die Rollenantriebseinheiten dementsprechend gesteuert bzw. geregelt werden. Insbesondere umfaßt das erfindungsgemäße Frachtladesystem mindestens eine Antriebsrolleneinheit zum Fördern von Gegenständen, insbesondere von Containern, Paletten, oder dergleichen auf einem Frachtdeck eines Flugzeugs, wobei die Antriebsrolleneinheit mindestens eine Antriebsrolle umfaßt, die mit einem durch eine Bedieneinrichtung steuerbaren Antriebsmotor in Wirkverbindung steht und die mit einer Unterseite des jeweils zu befördernden Gegenstands in Eingriff bringbar ist. Es ist mindestens eine Sensoreinrichtung vorgesehen, welche die hier wesentlichen Parameter des Gegenstands bzw. seines momentanen Zustands (z. B. Stillstand oder Fahrt) erfaßt, wobei insbesondere eine Meßrolle vorgesehen ist, die ebenfalls mit der Unterseite des Gegenstands in Verbindung bringbar ist. Es ist mindestens ein Meßfühler derart ausgebildet und mit der Meßrolle verbunden, bzw. in dieser angebracht, daß deren Umfangsgeschwindigkeit und/oder eine im wesentlichen vertikal zum Frachtdeck auf sie wirkende Last und/oder eine bei einem Abbremsen der Meßrolle auf sie wirkende horizontale Kraft bzw. ein entsprechendes Drehmoment in Meßsignale umgeformt werden. Eine Steuerung ist vorgesehen, der die Meßsignale zugeführt werden und die mit einem Antriebsmotor oder mehreren Antriebsmotoren im Frachtdeck eingebauter Antriebsrolleneinheiten in steuernder bzw. regelnder Verbindung steht. Die Steuerung ist derart ausgebildet, daß die Antriebsmotoren entsprechend den Meßsignalen gesteuert bzw. hinsichtlich Drehzahl und/oder Drehmoment geregelt werden. Vorzugsweise sind hierbei mehrere Sensoreinrichtungen vorgesehen, um die Bewegung der Gegenstände im gesamten Frachtraum überwachen zu können.

Wenn eine Sensoreinrichtung bzw. Meßrolle einer Rollenantriebseinheit räumlich eng zugeordnet ist, so kann sie bei entsprechender Ausrüstung mit einem Drehzahlfühler verwendet werden, um die Drehzahl des zur zugehörigen Rollenantriebseinheit gehörenden Antriebsmotors so zu regeln, daß zwischen der Antriebsrolle und der Unterseite des zu befördernden Gegenstands kein Schlupf auftritt. Dies wird ganz einfach dadurch bewerkstelligt, daß der Antriebsmotor auf eine derartige Drehzahl geregelt wird, daß die Umfangsgeschwindigkeit der Antriebsrolle der Umfangsgeschwindigkeit der Meßrolle entspricht. Weiterhin ist es möglich, bei Verwendung von mindestens zwei in Transportrichtung gesehen nacheinander liegenden Sensoren (z. B. Reflexionslichtschranken) anstelle der Meßrolle einen Geschwindigkeitswert zu errechnen und diesem Geschwindigkeitswert entsprechend den Antriebsmotor der vom Gegenstand als nächstes erreichten Rollenantriebseinheit so einzustellen, daß die Umfangsgeschwindigkeit der zugeordneten Antriebsrolle im wesentlichen dieser Geschwindigkeit entspricht bzw. (wenn man den Gegenstand beschleunigen will) ein wenig höher oder (wenn man den Gegenstand verzögern will) ein wenig niedriger liegt.

Bei einer bevorzugten Ausführungsform der Erfindung ist die Steuerung derart ausgebildet, daß die maximale Fördergeschwindigkeit eines Gegenstands entsprechend seinem Gewicht bzw. seiner Masse derart eingestellt wird, daß schwere Gegenstände mit niedrigerer Maximalgeschwindigkeit als leichtere Gegenstände gefördert werden. Das Gewicht bzw. die Masse des zu befördernden Gegenstands könnte als Vorgabewert manuell eingegeben werden, jedoch ist dies relativ zeitraubend. Es wird darum vorgeschlagen, mindestens einen Lastsensor im Einfahrbereich zum Frachtraum vorzusehen, mittels dessen die Masse (das Gewicht) des zu befördernden Gegenstands bestimmt wird. Entsprechend diesem Vorgabewert werden dann die Antriebsrolleneinheiten mit höheren oder niedrigeren Beschleunigungen bzw. Geschwindigkeiten betrieben, so daß einerseits die Beladungsgeschwindigkeit erhöht, andererseits die Gefahr von Kollisions-Beschädigungen bei Abbremsfehlern verringert wird.

Bei einer anderen Ausführungsform der Erfindung werden zur Bestimmung des Gewichts bzw. der Masse der zu befördernden Gegenstände die bei ihrer Beschleunigung wirkenden Kräfte gemessen, woraus dann die interessierenden Werte herleitbar sind. Dies kann zum einen dadurch geschehen, daß man die Momente mißt, welche auf die Antriebsrollen beim Beschleunigen der Gegenstände wirken oder aber man stattet die Meßrollen mit Bremsen aus und mißt die beim Abbremsen bewegter Gegenstände wirkenden Kräfte. Im letzteren Fall, also bei einer mit einer Bremse ausgestatteten Meßrolle wird diese vorzugsweise beim Abbremsen eines bewegten Gegenstands bzw. zum Halten eines Gegenstands (z. B. bei geneigtem Frachtdeck) mit einer Bremskraft beaufschlagt, deren Höhe in Abhängigkeit vom Gewicht bzw. der Masse des abzubremsenden bzw. zu haltenden Gegenstands eingestellt wird. Auf diese Weise ist es möglich, die zum Abbremsen oder Halten benötigte elektrische Energie aus dem Flugzeug-Bordnetz ebenso zu minimieren wie die mechanische und thermische Belastung der Meßrolle bzw. deren Bremse.

Bei einer Ausführungsform der Erfindung, bei welcher die Antriebsrolle in ihrer vertikalen Relativposition zum Frachtdeck einstellbar ist, wird die Steuerung derart ausgebildet, daß die Relativposition der Antriebsrolle in Abhängigkeit von einer Struktur und/oder Belastbarkeit der Unterseite des gerade geförderten Gegenstands eingestellt wird. Hierbei wird beispielsweise die maximal erlaubte Kraft auf den Boden des zu befördernden Gegenstands durch die Antriebsrolleneinheit gebracht, wozu diese (zunächst) immer bis zur maximal erlaubten Aufstellkraft aus ihrer unteren Ruheposition in ihre obere Arbeitsposition aufgestellt werden. Sobald ein Beam (Shoring) erkannt wird, wird die Antriebsrolle nach unten gefahren und danach wieder zum maximalen Grenzwert hochgefahren. Insbesondere zum Beladen mit Paletten ist dies hilfreich.

Die Sensoreinrichtungen bzw. Meßrollen, welche Antriebsrolleneinheiten direkt räumlich zugeordnet, insbesondere in Transportrichtung vor und/oder nach der Antriebsrolle angeordnet sind, werden bei einer Ausführungsform der Erfindung dazu verwendet, die Antriebsrolle bei Ankunft eines Gegenstands an den Sensoreinrichtungen, insbesondere der Meßrolle bzw. bei Verlassen der Meßrolle anzuheben bzw. abzusenken.

Bei einer Ausführungsform der Erfindung ist die Meßrolle als gesondert im Frachtdeck montierbare Einrichtung ausgebildet. Eine Vielzahl von solchen Meßrollen, insbesondere solche, die mit Bremseinrichtungen versehen sind, können dann als eigenständige Funktionseinheiten betrachtet werden, z. B. als solche, welche praktisch ausschließlich zum Abbremsen und/oder Halten von Gegenständen dienen. Es können ihnen auch verschiedene Zwecke zugeordnet werden. Beispielsweise können einzelne oder Gruppen von Meßrollen zunächst zur Ermittlung des Containergewichts bei gleichzeitigem Halten oder Abbremsen eines Containers verwendet werden, oder aber als Geschwindigkeitssensoren, welche zum Regeln der Antriebsgeschwindigkeit der Antriebsrolleneinheiten dienen. Vorzugsweise sind die Bremseinrichtungen der Meßrollen mittels der Bedieneinrichtung steuerbar. Zusätzlich können hier auch Automatik-Funktionen vorgesehen werden, um beispielsweise ein automatisches Abbremsen von zu schnell (insbesondere von Hand) beförderten Gegenständen sicherzustellen, damit keine Beschädigungen im Frachtraum und an den Containern auftreten.

Die Bedieneinrichtung umfaßt vorzugsweise eine Fernsteuerung, so daß eine Bedienungsperson einen Container bei seinem Weg durch den Frachtraum bis zu seinem Aufstellort (und wieder hinaus) begleiten kann. Dadurch ist eine verbesserte Führung des Containers sowohl durch direkte Beobachtung als auch durch Mithilfe von Hand gewährleistet. Bei einer Ausführungsform der Erfindung umfaßt die Bedieneinrichtung ein in üblicher Weise am Flugzeug befestigtes Steuerpult, welches aber einen Aufnahmeraum zur lösbaren Befestigung und Aufbewahrung der Fernsteuerung aufweist, wobei der Aufnahmeraum derart geformt ist, daß an der Fernsteuerung vorgesehene Bedienelemente bei im Aufnahmeraum deponierter Fernsteuerung unzugänglich sind. Bei Herausnehmen der Fernsteuerung kann man das Steuerpult deaktivieren, so daß keine widersprüchlichen Befehle gegeben werden können.

Bevorzugte Ausführungsformen der Erfindung ergeben sich aus den Unteransprüchen und der nachfolgenden Beschreibung von Beispielen, die anhand von Abbildungen näher erläutert werden. Hierbei zeigen:
- Fig. 1: eine perspektivische Darstellung einer Kombination aus Antriebsrolleneinheit, Lastrolle und Meßrolle,
- Fig. 2: eine Darstellung der Anordnung nach Fig. 1 in einem Blickwinkel entsprechend dem Pfeil II aus Fig. 1,
- Fig. 3: eine schematisierte Darstellung der Verschaltung einer Steuerung mit Sensoreinrichtungen und Rollenantriebseinheiten,
- Fig. 4: eine Darstellung ähnlich der nach Fig. 1 jedoch einer anderen Anordnungsweise der verschiedenen Einheiten,
- Fig. 5: eine Draufsicht auf die Anordnung nach Fig. 4,
- Fig. 6: eine Seitenansicht auf die Anordnung nach Fig. 4 aus dem Blickwinkel gemäß dem Pfeil VI aus Fig. 4,
- Fig. 7: eine perspektivische Darstellung einer Bedieneinrichtung,
- Fig. 8: eine schematisierte Teil-Schnitt-Darstellung einer schwenkbaren und anhebbaren Rollenantriebseinheit, und
- Fig. 9: eine Draufsicht auf die Rollenantriebseinheit nach Fig. 8.

In der nachfolgenden Beschreibung werden für gleiche und gleichwirkende Teile dieselben Bezugsziffern verwendet.

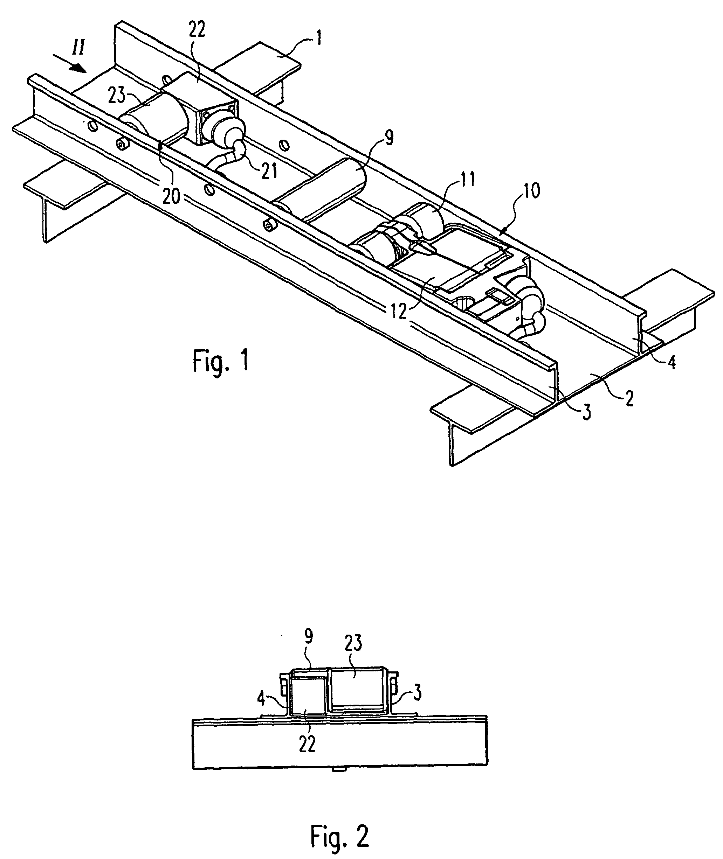

Bei der in Fig. 1 und Fig. 2 gezeigten Ausführungsform ist in einem Frachtdeck 1, von dem nur Querträger angedeutet sind, eine Aufnahmeschiene 2 mit Seitenschenkeln 3 und 4 angeordnet. Auf dem Boden der Aufnahmeschiene 2 ist mittels Schraubbolzen eine Antriebsrolleneinheit 10 befestigt, die eine (zweigeteilte) Antriebsrolle 11 aufweist, welche mittels eines Antriebsmotors 12 gedreht werden kann. Die Antriebsrolle 11 der Antriebsrolleneinheit 10 ist von einer Ruhestellung (gemäß Fig. 1) in eine angehobene Stellung anhebbar, in welcher die Antriebsrolle 11 mit einem über ihr befindlichen Gegenstand in reibschlüssigen Kontakt gebracht werden kann. Vorzugsweise wird als Rollenantriebseinheit eine solche verwendet, wie sie in der DE 197 19 160 beschrieben ist.

Weiterhin ist in der Aufnahmeschiene 2 eine Lastrolle 9 drehbar befestigt, die rein passiv ausgelegt ist.

Schließlich ist in der Aufnahmeschiene 2 eine Meßrolle 20 befestigt, die einen Sockel 22, eine an diesem befestigte Rolle 23 sowie eine Anschlußleitung 21 aufweist, über welche eine (nicht gezeigte) Bremse zum Abbremsen der Rolle 23 ansteuerbar ist und in welcher Meßsignale übertragen werden, die von (nicht gezeigten) Sensoren erzeugt werden. Diese Sensoren sind nun zum einen ein Drehzahlfühler, der Meßsignale liefert, welcher der Drehzahl bzw. der Umfangsgeschwindigkeit der Rolle 23 entsprechen. Weiterhin sind zwei Kraftsensoren vorgesehen, wovon der eine eine auf die Rolle 23 vertikal wirkende Last und der andere eine horizontale (in Richtung des Pfeiles II) wirkende Last bzw. ein Bremsmoment erfaßt, das beim Abbremsen der Rolle 23 entsteht, wenn sich über diese ein beförderter Gegenstand bewegt und abgebremst wird.

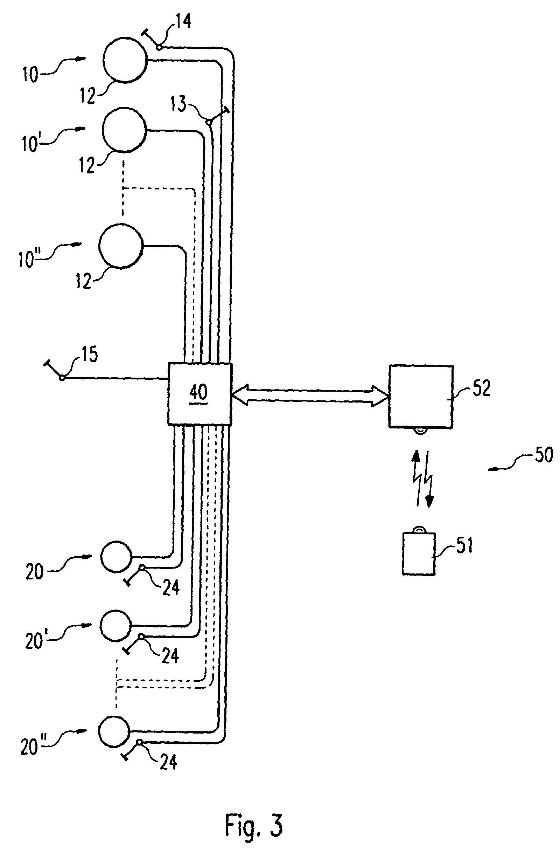

Wie in Fig. 3 gezeigt, stehen mehrere Antriebsrolleneinheiten 10, 10', 10'' bzw. deren Antriebsmotoren 12 mit einer Steuerung 40 derart in Verbindung, daß die Steuerung 40 die Antriebsmotoren 12 ansteuern kann. Es sind weiterhin ein Stromsensor 13 zum Feststellen der vom Antriebsmotor 12 erzeugten Vortriebskraft zum Befördern eines Gegenstands sowie ein Drehzahlsensor 14 vorgesehen, der die Umfangsgeschwindigkeit der Antriebsrolle 11 feststellt und ein entsprechendes Signal an die Steuerung 40 liefert.

Die Steuerung 40 ist weiterhin mit mehreren Meßrollen 20, 20', 20'' verbunden, die mit Bremseinrichtungen versehen sind, welche von der Steuerung 40 angesteuert werden können. Den Meßrollen 20, 20', 20'' sind Meßfühler 24 zugeordnet, wie sie zuvor gerade beschrieben wurden. Je nach Einsatzzweck kann also eine Meßrolle 20 mit einem einzeln oder aber auch mit mehreren Fühlern je nach Verwendungszweck versehen sein. Zusätzlich kann ein Lastmeßfühler 15 (oder Gruppen hiervon) vorgesehen sein, um beispielsweise das Gewicht eines zu befördernden Gegenstands zu bestimmen.

Die Steuerung 40 ist mit einer Bedieneinrichtung 50 verbunden, welche ein im Flugzeug fest montiertes Steuerpult 52 sowie eine Fernsteuerung 51 umfaßt, so daß die Bedieneinrichtung 50 alternativ an einem bestimmten Ort oder aber über die Fernsteuerung 51 bedient werden kann.

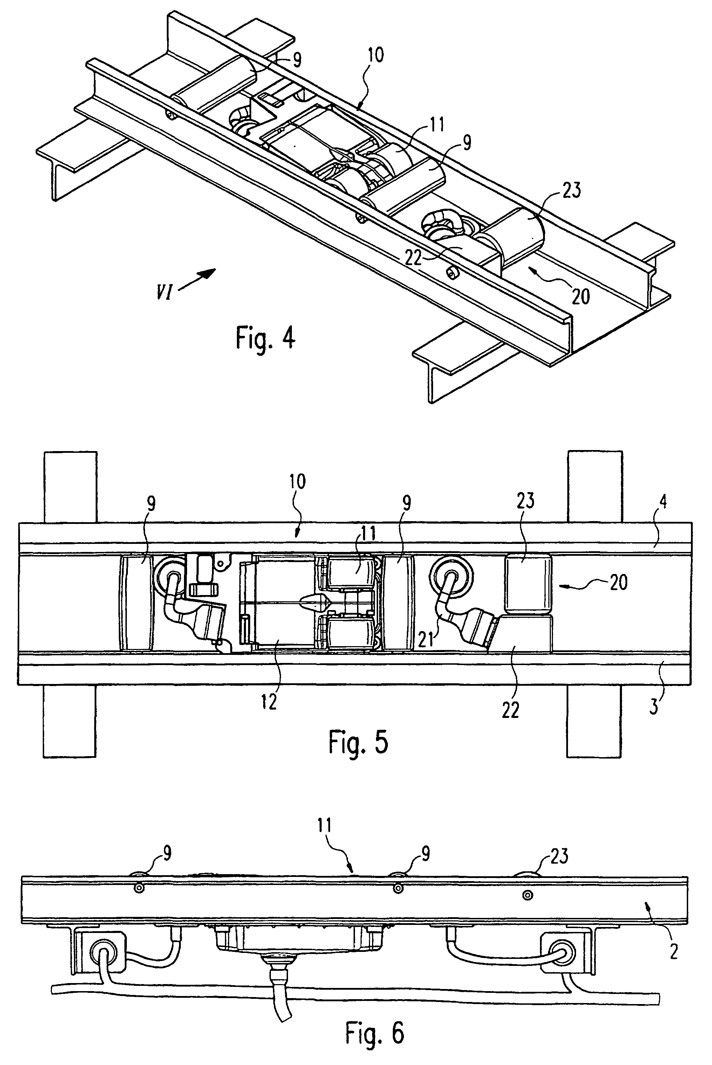

Die in den Fig. 4, 5 und 6 gezeigte Ausführungsform der Erfindung unterscheidet sich von der nach den Fig. 1 und 2 dadurch, daß zum einen ein erheblich engerer Aufbau vorliegt, bei welchem die Meßrolle 20 in sehr enger räumlicher Beziehung zur Antriebsrolleneinheit 10 steht. Dadurch ist eine besonders exakte Antischlupfregelung sowie Aufstellsteuerung der Antriebsrolleneinheit 10 möglich. Weiterhin weist diese Ausführungsform eine weitere (passive) Rolle 9 auf, so daß ein über die Anordnung fahrender Container auch bei vollständig abgesenkter Antriebsrolle 11 der Antriebsrolleneinheit 10 sicher gelagert ist.

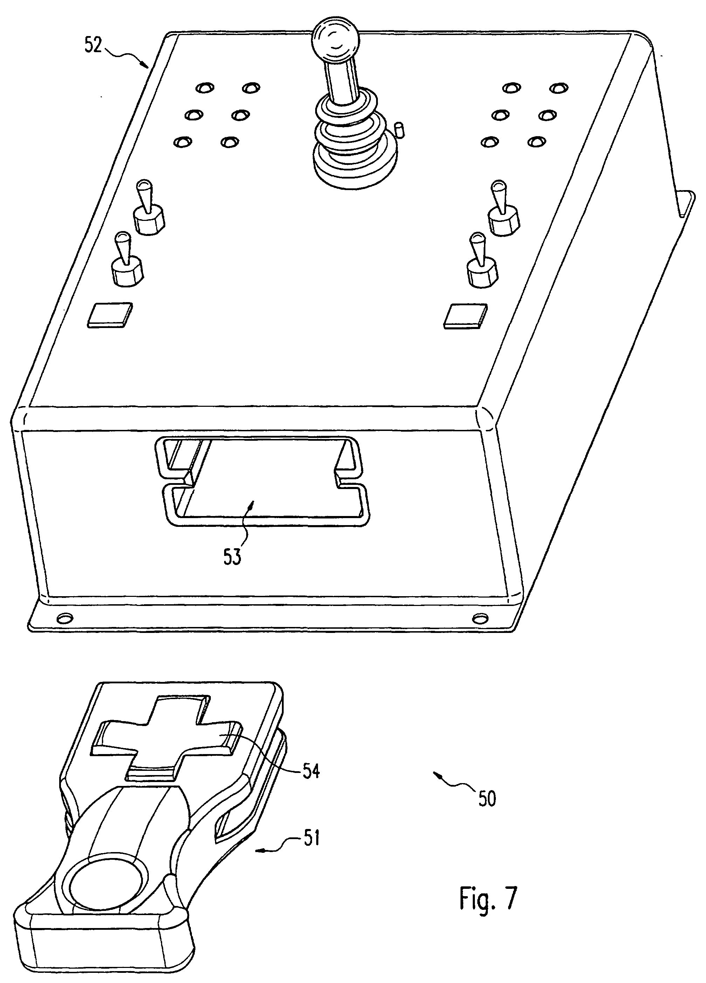

In Fig. 7 ist eine Bedieneinrichtung 50 dargestellt, welche ein (ortsfest zu montierendes) Steuerpult 52 sowie eine Fernsteuerung 51 aufweist. Die Fernsteuerung 51 kann in einen Aufnahmeraum 53 des Steuerpultes 52 eingesetzt werden, wenn man sie nicht benötigt. In diesem Fall ist ein auf der Fernsteuerung 51 vorgesehenes Bedienelement 54 im Aufnahmeraum 53 verborgen, so daß zur Bedienung nur noch die auf dem Steuerpult 52 vorgesehenen Bedienungselemente benützt werden können. Vorzugsweise ist innerhalb des Steuerpultes 52 bzw. in dessen Aufnahmeraum 53 ein Schalter vorgesehen und derart ausgebildet, daß bei einem Herausnehmen der Fernsteuerung 51 die Bedienelemente des Steuerpultes 52 deaktiviert werden.

Die mit Pfeilen in Fig. 3 angedeutete Verbindung kann zwischen der Fernsteuerung 51 und dem Steuerpult 52 erfolgen. Bei einer bevorzugten Ausführungsform der Erfindung wird jedoch das Signal über die Steuerleitungen der im Frachtraum montierten Antriebsrolleneinheiten an die Steuerung 40 übermittelt. Hierfür werden die üblicherweise an Antriebsrolleneinheiten montierten Infrarotsensoren (dort zur Detektion von zu befördernden Gegenständen in Lichtschranken angeordnet) verwendet, denen Infrarotsignale aus einem entsprechenden Infrarotsender der Fernbedienung 51 übermittelt werden. Hierbei wird eine Trennung der von der Fernsteuerung übermittelten Signale von den Signalen, welche an sich von diesen Infrarot(-Lichtschranken)Sensoren aufgenommen werden, durch eine entsprechende Codierung und Filterung vorgenommen. Auf diese Weise ist es möglich, nicht nur Sensoren zu sparen, da diese ohnehin im Flugzeug (in den Antriebsrolleneinheiten) vorgesehen sind, vielmehr gelingt es dadurch auch, über das gesamte Frachtdeck des Flugzeugs verteilte "Empfangsstationen" für die Fernsteuerung zu schaffen, so daß einerseits ein optimaler Empfang bzw. eine optimale Fernsteuerung sichergestellt, andererseits aufwendige, teuere, schwergewichtige und anfällige Verkabelungen gespart werden können.

Die soeben beschriebene Idee einer Fernsteuerung mit verteilten Empfängern, die durch an sich für Lichtschranken vorgesehene Empfänger gebildet sind, wird für selbständig erfinderisch gehalten.

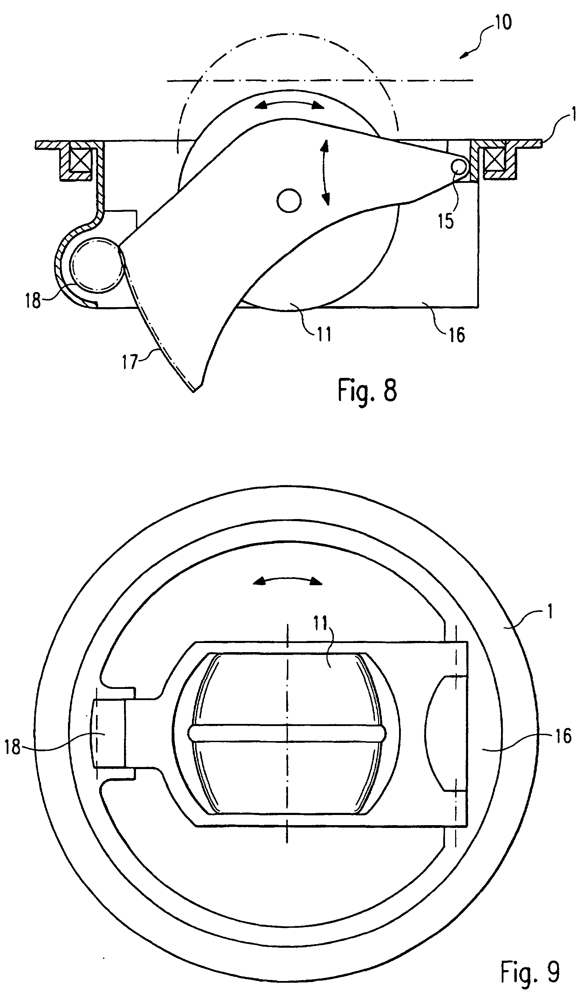

In den Fig. 8 und 9 ist eine Ausführungsform einer Antriebsrolleneinheit gezeigt, welche einen topfförmigen Rahmen 16 aufweist, der über ein Lager im Frachtdeck 1 gelagert ist. Innerhalb des topfförmigen Rahmens 16 ist ein einarmiger Hebel bzw. eine Wippe 17 um eine horizontale Achse schwenkbar befestigt, wobei die Achse gleichzeitig einen Kraftmeßfühler 15 bildet bzw. mitumfaßt. Die Wippe 17 kann über einen Hubmotor 18 hochgehoben werden, so daß die Antriebsrolle 11 aus einer abgesenkten Ruhestellung in eine angehobene Arbeitsstellung (durch die unterbrochene Linie dargestellt) verschwenkt werden kann. Mit der horizontalen strichpunktierten Linie ist die Ebene gezeigt, in welcher die unangetriebenen Rollen 9 sowie die Meßrollen 20 mit ihren Oberflächen liegen. In derselben Ebene liegen demzufolge auch die tiefsten Punkte der zu befördernden Gegenstände (von schadenbedingten Ausnahmen abgesehen).

Aus obiger Beschreibung geht hervor, daß der Idee einer selbständigen Meßrolle, welche mit einer steuerbaren Bremse ausgestattet ist, ein selbständiger erfinderischer Gehalt beigemessen wird. Eine derartige Meß- und Bremsrolle kann in vielfältiger Weise auch zusätzlich zu schon vorhandenen Antriebseinheiten oder auch in Kugelmatten oder dergleichen verwendet werden.

Weiterhin ergibt sich aus obigem, daß die Erfindung auch ein Verfahren zum Befördern von Containern betrifft, wobei die oben offenbarten Merkmale insbesondere hinsichtlich der auf die Masse der zu befördernden Gegenstände bezogenen (unterschiedlichen) Fördergeschwindigkeiten und Förderbeschleunigungen für relevant erachtet werden.

Die besondere Form der Bedieneinrichtung mit Fernsteuerung wird ebenfalls für sich alleine gesehen als erfinderisch beansprucht.

### Bezugszeichenliste

- 1: Frachtdeck
- 2: Aufnahmeschiene
- 3: Schenkel
- 4: Schenkel
- 9: Rolle
- 10: Antriebsrolleneinheit
- 11: Antriebsrolle
- 12: Antriebsmotor
- 13: Drehmomentfühler
- 14: Drehzahlfühler
- 15: Lastmeßfühler
- 16: Rahmen
- 17: Wippe
- 18: Hubmotor
- 20: Meßrolle
- 21: Anschlußleitung
- 22: Sockel
- 23: Rolle
- 24: Meßfühler
- 40: Steuerung
- 50: Bedieneinrichtung
- 51: Fernsteuerung
- 52: Steuerpult
- 53: Aufnahmeraum
- 54: Bedienelement

## Patentansprüche

1. Frachtladesystem mit einer Vielzahl von Antriebsrolleneinheiten (10, 10', 10") zum Fördern von Containern, Paletten oder dergleichen Gegenständen auf einem Frachtdeck (1) eines Flugzeugs, wobei die Antriebsrolleneinheiten (10) mindestens eine Antriebsrolle (11) umfassen, die mit einem steuerbaren Antriebsmotor (12) in Wirkverbindung steht und die mit einer Unterseite des Gegenstands in Eingriff bringbar ist, mit mindestens einer Sensoreinrichtung (20), die ebenfalls mit der Unterseite des Gegenstands in Verbindung bringbar ist, mit mindestens einem Meßfühler, der derart ausgebildet und mit der Sensoreinrichtung verbunden ist, daß die Geschwindigkeit des Gegenstands und/oder eine durch den Gegenstand im wesentlichen vertikal zum Frachtdeck (1) wirkende Last und/oder eine beim Abbremsen des Gegenstands wirkende horizontale Kraft bzw. ein entsprechendes Drehmoment in Meßsignale umgeformt werden, mit einer Steuerung (40) mit Bedieneinrichtung (50), der die Meßsignale zugeführt werden und die mit mehreren Antriebsmotoren (12) im Frachtdeck eingebauter Antriebsrolleneinheiten (10, 10', 10") in steuernder bzw. regelnder Verbindung steht, wobei die Steuerung (40) derart ausgebildet ist, daß die Antriebsmotoren (12) entsprechend den Meßsignalen gesteuert bzw. hinsichtlich Drehzahl und/oder Drehmoment geregelt werden.

2. Frachtladesystem nach Anspruch 1,
**dadurch gekennzeichnet, daß**
die Steuerung (40) derart ausgebildet ist, daß die Drehzahl des Antriebsmotors (12) zur Vermeidung eines Schlupfes zwischen der Unterseite des Gegenstands und der Antriebsrolle (11) entsprechend Signalen der Sensoreinrichtung bzw. der Umfangsgeschwindigkeit der Meßrolle (20) geregelt wird.

3. Frachtladesystem nach einem der vorhergehenden Ansprüche,
**dadurch gekennzeichnet, daß**
die Steuerung (40) derart ausgebildet ist, daß die maximale Fördergeschwindigkeit eines Gegenstands entsprechend seinem Gewicht bzw. seiner Masse derart eingestellt wird, daß schwerere Gegenstände mit niedrigeren Maximalgeschwindigkeiten als leichtere Gegenstände gefördert werden.

4. Frachtladesystem nach einem der vorhergehenden Ansprüche,
**dadurch gekennzeichnet, daß**
die Steuerung (40) derart ausgebildet ist, daß eine auf die Antriebsrolle (12) und/oder auf die Meßrolle (20) wirkende Bremse mit steigendem Gewicht bzw. steigender Masse des Gegenstandes mit einer steigenden Bremskraft zum Abbremsen eines sich bewegenden und/oder Halten eines stehenden Gegenstandes beaufschlagt wird.

5. Frachtladesystem nach einem der vorhergehenden Ansprüche,
**dadurch gekennzeichnet, daß**
die Antriebsrolle (11) in ihrer vertikalen Relativposition zum Frachtdeck (1) einstellbar ist und daß die Steuerung (40) derart ausgebildet ist, daß die Relativposition der Antriebsrolle (11) in Abhängigkeit von einer Struktur und/oder Belastbarkeit der Unterseite des gerade geförderten Gegenstands eingestellt wird.

6. Frachtladesystem nach einem der vorhergehenden Ansprüche,
**dadurch gekennzeichnet, daß**
die Steuerung (40) derart ausgebildet ist, daß die Gegenstände mit vorgegebenen Beschleunigungswerten beschleunigt bzw. abgebremst werden.

7. Frachtladesystem nach einem der vorhergehenden Ansprüche,
**dadurch gekennzeichnet, daß**
die Sensoreinrichtung bzw. Meßrolle (20) derart relativ zur Antriebsrolle (12) in Transportrichtung positioniert ist, daß die Antriebsrolle (12) bei Ankunft eines Gegenstands an der Sensoreinrichtung bzw. Meßrolle (20) bzw. bei Verlassen der Sensoreinrichtung bzw. Meßrolle (20) angehoben bzw. abgesenkt wird.

8. Frachtladesystem nach einem der vorhergehenden Ansprüche,
**dadurch gekennzeichnet, daß**
der Antriebsmotor (12) einen Strom- oder Drehmomentmeßfühler (13) aufweist, dessen Ausgangssignale beim Beschleunigen des Gegenstands der Steuerung (40) zur Herleitung des Gewichts bzw. der Masse des Gegenstands übermittelt werden.

9. Frachtladesystem nach Anspruch 3,
**dadurch gekennzeichnet, daß**
die Antriebsrolle (12) von einer unteren Ruhestellung in eine obere Arbeitsstellung anhebbar ausgebildet und mit einer Meßeinrichtung (15) zum Messen des Gewichts des Gegenstands versehen ist, deren Ausgangssignale an die Steuerung (40) geliefert werden.

10. Frachtladesystem nach einem der vorhergehenden Ansprüche,
**dadurch gekennzeichnet, daß**
die Sensoreinrichtung bzw. Meßrolle (20) als gesonderte im Frachtdeck (1) montierbare Einrichtung ausgebildet ist.

11. Frachtladeystem nach einem der vorhergehenden Ansprüche,
**dadurch gekennzeichnet, daß**
die Meßrolle mit einer steuerbaren Bremseinrichtung versehen ist, welche insbesondere mittels der Bedieneinrichtung (50) steuerbar ist.

12. Frachtladesystem nach einem der vorhergehenden Ansprüche,
**dadurch gekennzeichnet, daß**
die Bedieneinrichtung (50) eine Fernsteuerung (51) umfaßt.

13. Frachtladesystem nach Anspruch 12,
**dadurch gekennzeichnet, daß**
die Bedieneinrichtung (50) ein am Flugzeug befestigtes Steuerpult (52) umfaßt, welches einen Aufnahmeraum (53) zum lösbaren Befestigen und Aufbewahren der Fernsteuerung (51) aufweist, wobei der Aufnahmeraum (53) vorzugsweise derart geformt ist, daß an der Fernsteuerung (51) vorgesehene Bedienelemente (54) bei im Aufnahmeraum (53) deponierter Fernsteuerung (51) unzugänglich sind.

## Claims

1. A freight loading system having a plurality of drive roller units (10,10',10") for conveying containers, pallets or like articles on the freight deck (1) of an aircraft, wherein drive roller units (10) comprise at least one drive roller (11) which is in operative connection with a controllable drive motor (12) and which can be brought into engagement with the underside of an article, having at least one sensor device (20) which can also be brought into contact with the underside of the article, having at least one measuring sensor which is so designed and connected with the sensor device that the speed of the article and/or a load acting through the article substantially vertically to the freight deck (1) and/or a force acting horizontally during the retarding of the article or a corresponding torque are converted into measuring signals, having a control means (40) with an operating device (50) to which the measuring signals are fed and which control means with a plurality of drive motors (12) is in controlling or regulating communication with drive roller units (10,10',10") installed in the freight deck, wherein the control means (40) is designed so that the drive motors (12) are controlled in accordance with the measuring signals or are regulated with respect to speed of rotation and/or torque.

2. A freight loading system according to Claim 1, **characterised in that** the control means (40) is designed so that the speed of rotation of the drive motor (12) is regulated so as to avoid any slip between the underside of the article and the drive roller (11) in accordance with signals of the sensor device and the circumferential speed of the measuring roller (20).

3. A freight loading system according to any one of the preceding Claims, **characterised in that** the control means (40) is designed so that the maximum conveying speed of an article is so adjusted according to its weight or its mass that relatively heavy articles are conveyed at slower maximum speeds than relatively light articles.

4. A freight loading system according to any one of the preceding Claims, **characterised in that** the control means (40) is designed so that a brake acting, with increasing weight or increasing mass of the article, on the drive roller (11) and/or on the measuring roller (20) is acted upon with an increasing braking force for retarding a moving article and/or for holding a stationary article.

5. A freight loading system according to any one of the preceding Claims, **characterised in that** the drive roller (11) can be adjusted in its vertical position relative to the freight deck (1), and **in that** the control means (40) is designed so that the relative position of the drive roller (11) is adjusted depending on the structure and/or load-bearing capacity of the underside of the article just conveyed.

6. A freight loading system according to any one of the preceding Claims, **characterised in that** the control means (40) is designed so that the articles are accelerated or retarded at predetermined acceleration values.

7. A freight loading system according to any one of the preceding Claims, **characterised in that** the sensor device or measuring roller (20) is so positioned relative to the drive roller (11) in conveying direction that the drive roller (11) is raised or lowered upon arrival of an article at the sensor device or measuring roller (20) or upon leaving the sensor device or measuring roller (20).

8. A freight loading system according to any one of the preceding Claims, **characterised in that** the drive motor (12) has a current or torque measuring sensor (13), the output signals of which during acceleration of the article are transmitted to the control means (40) so as to derive the weight or mass of the article.

9. A freight loading system according to Claim 3, **characterised in that** the drive roller (11) is designed so that it can be raised from a lower rest position into an upper operative position and is provided with a measuring device (15) for measuring the weight of the article, the output signals of which device are fed to the control means (40).

10. A freight loading system according to any one of the preceding Claims, **characterised in that** the sensor device or measuring roller (20) is in the form of a separate device which can be installed in the freight deck (1).

11. A freight loading system according to any one of the preceding Claims, **characterised in that** the measuring roller is provided with a controllable braking device which in particular can be controlled by means of the operating device (50).

12. A freight loading system according to any one of the preceding Claims, **characterised in that** the operating device (50) comprises a remote control (51).

13. A freight loading system according to Claim 12, **characterised in that** the operating device (50) comprises a control console (52) mounted on the aircraft, which has a receptacle (53) for the detachable fastening and storage of the remote control (51), wherein the receptacle (53) is preferably so shaped that operating elements (54) provided on the remote control (51) are not accessible when the remote control (51) is deposited in the receptacle (53).

## Revendications

1. Système de chargement de fret avec une multiplicité d'unités de rouleaux d'entraînement (10, 10', 10") pour le transport de conteneurs, de palettes ou d'objets similaires sur un pont de fret (1) d'un avion, dans lequel les unités de rouleaux d'entraînement (10) comprennent au moins un rouleau d'entraînement (11) qui se tient en liaison active avec un moteur d'entraînement commandable (12) et qui peut être mis en prise avec une face inférieure de l'objet, comportant au moins un dispositif de détecteurs (20) qui peut également être mis en liaison avec la face inférieure de l'objet, avec au moins un capteur de mesure qui est agencé et relié au dispositif de détecteurs en sorte que la vitesse de l'objet et/ou une charge s'appliquant par l'objet de façon sensiblement verticale sur le pont de fret (1), et/ou une force agissant horizontalement lors du freinage de l'objet ou un moment en rotation correspondant sont transformés en signaux de mesure, comportant une commande (40) avec un dispositif de manoeuvre (50) auquel les signaux de mesure sont amenés et qui se tient en liaison de commande ou de régulation avec des moteurs d'entraînement (12) d'unités d'entraînement de rouleaux (10, 10', 10") installées dans le pont de fret, dans lequel la commande (40) est agencée de sorte que les moteurs d'entraînement (12) sont commandés en correspondance avec les signaux de mesure ou régulés en ce qui concerne la vitesse de rotation et/ou le moment de rotation.

2. Système de chargement de fret selon la revendication 1, **caractérisé en ce que** la commande (40) est agencée de façon que, pour éviter un patinage entre la face inférieure de l'objet et le rouleau d'entraînement (11), la vitesse de rotation du moteur d'entraînement (12) est régulée conformément aux signaux du dispositif de détecteurs et à la vitesse périphérique du rouleau de mesure (20).

3. Système de chargement de fret selon l'une des revendications précédentes, **caractérisé en ce que** la commande (40) est agencée de façon que la vitesse maximale de transport d'un objet soit réglée conformément à son poids ou à sa masse, en sorte que des objets plus lourds sont transportés à une vitesse maximale plus basse que des objets plus légers.

4. Système de chargement de fret selon l'une des revendications précédentes, **caractérisé en ce que** la commande (40) est agencée de façon qu'un frein agissant sur le rouleau d'entraînement (12) et/ou sur le rouleau de mesure (20) soit sollicité, pour un poids croissant ou une masse croissante de l'objet, avec une force de freinage croissante pour le freinage d'un objet se tenant en déplacement et/ou à l'arrêt.

5. Système de chargement de fret selon l'une des revendications précédentes, **caractérisé en ce que** le rouleau d'entraînement (11) est réglable dans sa position relative verticale par rapport au pont de fret (1), et **en ce que** la commande (40) est agencée de façon que la position relative du rouleau d'entraînement (11) soit réglée en fonction d'une structure et/ou d'une capacité de charge de la face inférieure de l'objet transporté à l'instant.

6. Système de chargement de fret selon l'une des revendications précédentes, **caractérisé en ce que** la commande (40) est agencée de façon que les objets sont accélérés ou freinés avec des valeurs d'accélération prédéterminées.

7. Système de chargement de fret selon l'une des revendications précédentes, **caractérisé en ce que** le dispositif de détecteurs ou le rouleau de mesure (20) est positionné, relativement au rouleau d'entraînement (12) dans la direction du transport, en sorte que le rouleau d'entraînement (12) est soulevé ou abaissé à l'arrivée d'un objet sur le dispositif de détecteurs ou sur le rouleau de mesure (20), et lorsqu'il quitte le dispositif de détecteurs et le rouleau de mesure (20).

8. Système de chargement de fret selon l'une des revendications précédentes, **caractérisé en ce que** le moteur d'entraînement (12) comporte un capteur de mesure (13) de courant ou d'un moment de rotation, dont les signaux de sortie lors de l'accélération de l'objet sont transmis à la commande (40) pour la déduction du poids ou de la masse de l'objet.

9. Système de chargement de fret selon la revendication 3, **caractérisé en ce que** le rouleau d'entraînement (12) est constitué par un rouleau pouvant être soulevé d'une position inférieure de repos dans une position supérieure de travail, et est pourvu d'un dispositif de mesure (15) pour la mesure du poids de l'objet, dont les signaux de sortie sont délivrés à la commande (40).

10. Système de chargement de fret selon l'une des revendications précédentes, **caractérisé en ce que** le dispositif de détecteurs et le rouleau de mesure (20) sont constitués par un dispositif pouvant être monté séparément sur le pont de fret (1).

11. Système de chargement de fret selon l'une des revendications précédentes, **caractérisé en ce que** le rouleau de mesure est pourvu d'un dispositif de freinage commandable, qui peut être réglé en particulier au moyen du dispositif de manoeuvre (50).

12. Système de chargement de fret selon l'une des revendications précédentes, **caractérisé en ce que** le dispositif de manoeuvre (50) inclut une télécommande (51).

13. Système de chargement de fret selon la revendication 12 ,**caractérisé en ce que** le dispositif de manoeuvre (50) comprend un pupitre de commande (52) fixé à l'avion, lequel pupitre comporte un logement (53) pour une fixation amovible et pour conserver la télécommande (51), et le logement (53) est de préférence formé de façon que des éléments de manoeuvre (54) prévus sur la télécommande (51) soient inaccessibles quand la télécommande (51) est déposée dans le logement (53).
